# EUROPÄISCHE PATENTSCHRIFT

(11) **EP 3 516 271 B1**
(45) Veröffentlichungstag und Bekanntmachung des Hinweises auf die Patenterteilung: **03.04.2024**
(21) Anmeldenummer: 17781412.6
(22) Anmeldetag: 21.09.2017
(51) Int. Cl.: F16H 63/30

(54) **GANG UND GASSEN (XY)-GETRIEBESTELLER**
GEAR AND GATE (XY) GEAR ACTUATOR
ACTIONNEUR DE RAPPORT ET DE VOIE (XY) DE BOÎTE DE VITESSES

(30) Priorität: 23.09.2016 DE 102016218340
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: WINTER, Simon, 81241 München (DE); KRAL, Martin, 80997 München (DE); GEIS-ESSER, Daniel, 81377 München (DE)
(86) Internationale Anmeldenummer: PCT/EP2017/073917
(87) Internationale Veröffentlichungsnummer: WO 2018/055041

(56) Entgegenhaltungen:
- EP-A1- 0 058 964
- EP-A1- 1 031 772
- EP-A2- 0 795 701
- EP-A2- 1 538 372
- DE-A1- 10 045 266
- DE-A1- 10 209 772
- DE-A1- 19 843 584
- JP-A- H01 312 254
- US-A- 3 513 717
- US-A- 4 709 793
- US-A- 5 704 252
- US-A1- 2004 177 714
- US-A1- 2011 138 959

## Beschreibung

Die vorliegende Erfindung betrifft eine Vorrichtung zum Schalten von Gängen eines Fahrzeuggetriebes; insbesondere eines Nutzfahrzeuggetriebes, ausgeführt als Schaltmuffengetriebe.

Gang und Gassen XY-Getriebesteller, nachfolgend auch als "XY-Getriebesteller" bezeichnet, sind üblicherweise in Getrieben mit Schaltmuffen, welche den Kraftschluss eines bestimmten Ganges mit Hilfe einer Synchronisierungseinrichtung herstellen, im Einsatz. Ein solches Getriebe besitzt eine erste Hauptrichtung, nachfolgend X-Richtung genannt, welche parallel zu den Drehachsen der Getriebewellen verläuft und eine zweite Hauptrichtung, nachfolgend Y-Richtung genannt, welche orthogonal zur X-Richtung verläuft. Die Schnittstelle zum XY-Getriebesteller bilden üblicherweise mehrere Schaltlineale. Jedes Schaltlineal ist über eine Schubstange fest mit einer Schaltgabel verbunden. Die Schubstange verläuft üblicherweise parallel zur X-Richtung. Die Schaltgabeln sind formschlüssig mit den Schaltmuffen verbunden. Die Schaltmuffen stellen über Verschiebung auf der Getriebewelle in X-Richtung den Kraftschluss zwischen Welle und Zahnrad her. Der Verbund Schaltlineal-Schubstange-Schaltgabel ist in Richtung der Getriebeachse verschiebbar gelagert.

Eine kompaktere Variante des Mechanismus wird dadurch erzeugt, dass die Schaltlineale direkt mit den Schaltgabeln verbunden sind und axial verschiebbar auf den Schubstangen gelagert sind. Hierbei kann auch nur eine Schubstange verbaut sein, auf der alle Schaltlineale geführt sind.

Jedes Schaltlineal verfügt über eine Aussparung. Diese ermöglicht es über das formschlüssig eingreifende Stellglied des XY-Getriebestellers, nachfolgend als "Schaltfinger" bezeichnet, die Schaltlineale in X-Richtung des Getriebes zu verschieben.

Ist kein Gang eingelegt, sind die Schaltmuffen in Neutralstellung und die Zahnräder sind ohne Kraftschluss auf der Welle gelagert. In dieser Stellung bilden die Aussparungen der Schaltlineale eine Gasse durch die der Schaltfinger in einer Wählbewegung quer zur Getriebehauptachse verschoben werden kann.

Um den Kraftfluss einer Zahnradstufe herzustellen, führt der Schaltfinger anschließend eine Schaltbewegung aus. Dabei verschiebt er den Verbund Schaltlineal-Schubstange-Schaltgabel in Richtung der Getriebehauptachse, um mittels der Schaltmuffe und der Synchronisationseinheit eine drehfeste Verbindung zwischen Welle und Zahnrad herzustellen. Beide Bewegungen des Schaltfingers sind üblicherweise translatorisch und zueinander orthogonal.

Ausführungen des Schaltfingers, welche in der Schalt- oder Wählbewegung, eine Abgleit- oder Abwälzbewegung im Kontakt Schaltfinger-Schaltlineal zur Folge haben, erfordern eine besondere konstruktive Gestaltung. Da die Schaltbewegung stets mit relativ hoher Kraft durchgeführt wird, ist die Kontaktfläche entsprechend widerstandsfähig auszubilden. Eine Relativbewegung in der Kontaktstelle führt zudem stets zu einer Reduzierung des Wirkungsgrads und zu einer Verschleißerhöhung der Stelleinheit.

Befindet sich das Getriebe in Neutralstellung, so besteht die Möglichkeit, dass über den Schaltfinger gleichzeitig zwei Schaltlineale bewegt werden, wenn die Wählbewegung nicht sauber durchgeführt wurde. Eine Schaltung von zwei Schaltlinealen würde zu einer Zerstörung des Getriebes führen. Üblicherweise ist dies durch einen konstruktiv aufwändigen Sicherheitsmechanismus verhindert, welcher es dem Schaltfinger erlaubt, nur ein Lineal zu bewegen.

Ist ein Gang eingelegt, so besteht die Möglichkeit, dass sich ein anderes Schaltlineal ebenfalls aus der Neutral- in die Schaltstellung bewegt, da es nicht in der Neutralstellung festgehalten wird. Üblicherweise wird dies ebenfalls durch einen konstruktiv aufwändigen Sicherheitsmechanismus, oder eine Rastierung verhindert, wodurch die nicht aktiven Schaltlineale in Neutralstellung fixiert werden.

Herkömmlicherweise bilden Schaltfinger und Sicherheitsmechanismus eine Einheit, welche zur Ausführung der Wählbewegung gesamthaft verschoben wird. Dies hat zur Folge, dass bei einer Wählbewegung stets relativ hohe Massen bewegt werden müssen, und somit der Energieverbrauch für Beschleunigung und Abbremsen des Schaltfingers relativ hoch ist. Ein solcher Sicherheitsmechanismus ist aus DE 10 2006 005 249 A1 bekannt.

Herkömmlicherweise werden die Wähl- und Schaltbewegung des Schaltfingers über getrennte Aktuatoren durchgeführt. Diese prägen üblicherweise über ein Gestänge dem Schaltfinger die gewünschte Bewegung auf. Diese Ausführungsform, als Beispiel sei DE 10 2006 005 249 A1 genannt, bewirkt jedoch einen erhöhten Bauraumbedarf im Getriebe, da zwei Aktuatoren zum Teil quer zur Getriebehauprichtung angeordnet sind.

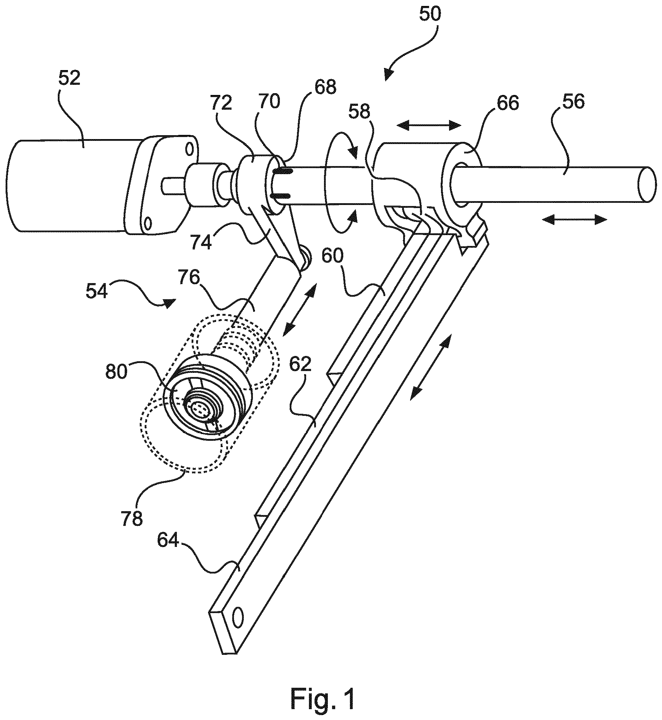

**Fig. 1** zeigt eine herkömmliche Getriebestellvorrichtung für ein Schaltgetriebe zur Durchführung einer Schaltbewegung gemäß der DE 10 2006 005 249 A1. Gezeigt ist schematisch eine Getriebestellvorrichtung 50 mit einem Aktuator 52 zur Auswahl einer Schaltgasse und mit einem Aktuator 54 zur Durchführung einer Schaltbewegung. Bei dem Aktuator 52 handelt es sich um einen elektromechanischen Aktuator. Bei dem Aktuator 54 handelt es sich um einen hydraulischen oder pneumatischen Aktuator. Das Auswählen einer Schaltgasse erfolgt durch Betätigung des Aktuators 52, der eine Schaltwelle 56 axial verschiebt. Zur Verdrehung der Schaltwelle 56 ist ein hydraulischer Aktuator 54 vorgesehen, der einen in einem Zylinder 78 geführten Kolben 80 umfasst, der mit einer unter Abdichtung aus dem Zylinder 78 herausgeführten Kolbenstange 76 in Verbindung steht. Die Kolbenstange 76 ist an einem Schalthebel 74 angelenkt, dessen ringartig ausgebildeter Endabschnitt 72 auf der Schaltwelle 56 sitzt. Der ringartig ausgebildete Endabschnitt 72 weist an seinem Innenumfangsbereich Nuten 70 auf, die auf der Schaltwelle 56 gebildete Stege 68 greifen, so dass eine Verzahnung gebildet wird. Dadurch führt eine Betätigung des hydraulischen Aktuators 54 zu einer Verdrehung der Schaltwelle 56. Dadurch wird sichergestellt, dass sich der ringförmig ausgebildete Endabschnitt 72 nicht axial mit der Schaltwelle 56 bewegt, wenn diese axial verschoben wird. Zu diesem Zweck kann der Schalthebel 74 beispielsweise an einem nicht dargestellten Gehäuse abgestützt sein. Der Schaltwelle 56 ist weiterhin ein Schaltfinger 58 zugeordnet, der als Nocke der Schaltwelle 56 ausgebildet ist. Somit wird der Schaltfinger 58 bei einer axialen Verschiebung der Schaltwelle 56 in Richtung ihrer Längsachse verschoben. Wenn die Schaltwelle 56 mit Hilfe des hydraulischen Aktuators 54 um ihre Längsachse verdreht wird, führt dies dazu, dass der Schaltfinger 58 seine bezogen auf die Schaltwelle 56 radiale Stellung verändert.

In der dargestellten Stellung wurde der Schaltfinger 58 mit der Schaltstange 62 von insgesamt drei Schaltstangen 60, 62, 64 ausgerichtet, indem die Schaltwelle 56 mit Hilfe des elektromechanischen Aktuators 52 entsprechend axial verschoben wurde. Eine sich nun anschließende Bewegung des Kolbens 80 bezogen auf die Darstellung nach vorne führt dazu, dass der Schaltfinger 58 die mit ihm ausgerichtete Schaltstange 62 ebenfalls nach vorne schiebt, um eine Schaltbewegung durchzuführen, wie dies durch die entsprechenden Pfeile angedeutet ist.

Bei der dargestellten Getriebestellvorrichtung 50 ist der Schaltwelle 56 weiterhin eine Verriegelungseinrichtung 66 zugeordnet. Diese Verriegelungseinrichtung 66 weist einen ringförmig ausgebildeten oberen Abschnitt auf, mit dem sie auf der Schaltwelle 56 sitzt. Die Verriegelungseinrichtung 66 verschiebt sich mit der Schaltwelle 56 axial; sie kann sich aber nicht mit der Schaltwelle 56 verdrehen, beispielsweise aufgrund geeigneter Abstützung an dem nicht dargestellten Gehäuse. Die Verriegelungseinrichtung hält daher mit ihrem unteren anschlagartigen Abschnitt die nicht ausgewählten Schaltstangen 60, 64 in der Neutralstellung. Eine Schaltgasse bzw. eine der Schaltstangen 60, 62, 64 wird dadurch ausgewählt, indem der elektromechanische Aktuator 52 betätigt wird, um die Schaltwelle 56 und mit ihr den Schaltfinger 58 in Längsrichtung der Schaltwelle 56 zu verschieben. Im dargestellten Fall wurde der Schaltfinger 58 mit der mittleren Schaltstange 62 ausgerichtet.

Eine Schaltbewegung wird dadurch ausgeführt, dass der hydraulische Aktuator 54 betätigt wird. Zu diesem Zweck wird der Zylinder 78 mit Druck beaufschlagt, so dass sich der Kolben 80 bezogen auf die Darstellung nach vorne bewegt. Dies führt dazu, dass sich die Schaltwelle 56 bezogen auf die Darstellung im Uhrzeigersinn dreht, wodurch der Schaltfinger 58 die Schaltstange 62 bezogen auf die Darstellung nach vorne verschiebt, um die Schaltbewegung durchzuführen.

Nachteilig an dieser Vorrichtung ist, dass ein großer Bauraum benötigt wird, um die Getriebestellvorrichtung unterzubringen. Insbesondere die quer zu der Getriebehauptachse bzw. den Schaltstangen verlaufende Schaltwelle 56 sowie der in Verlängerung angeflanschte Aktuator 52 erfordern eine relativ große Breite der Getriebestellvorrichtung. Der in Achsrichtung der Schaltstangen versetzt angebrachte Aktuator 54 vergrößert zudem den für die Unterbringung der Stellvorrichtung 50 benötigten Bauraum.

Im Stand der Technik, beispielsweise im Patentdokument EP 1 538 372 A2, hat sich daher eine Getriebestelleinrichtung etabliert, welche die Gassenwahl anhand der Rotationsbewegung und die Gangwahl anhand der translatorischen Bewegung vornimmt, also exakt entgegengesetzt der oben beschriebenen Wirkungsweise. Daraus folgt die Möglichkeit, die Getriebestelleinrichtung mit einem deutlich verbesserten Integrationsgrad auszuführen und somit eine bauraumoptimierte Vorrichtung bereitstellen zu können. Jedoch müssen dabei vergleichsweise hohe Massen bewegt werden, da die Schaltfinger größer/länger ausgeführt werden müssen, um einen ausreichend hohen Abstand der Schaltlineale gewähren zu können. Dies verschlechtert die Dynamik beim Schaltvorgang und erfordert eine vergleichsweise leistungsstarke Aktuatorik.

Es ist die Aufgabe der folgenden Erfindung, einen Schaltmechanismus bereitzustellen, der die oben genannten Probleme löst und sich zudem durch einen hohen Integrationsgrad auszeichnet. Darunter ist eine Reduzierung von Bauraum, Teilen und Kosten zu verstehen.

Diese Aufgabe wird mittels des unabhängigen Anspruchs gelöst. Vorteilhafte Weiterbildungen sind Gegenstand der Unteransprüche.

Die Getriebestelleinrichtung weist vorzugsweise einen Schaltzylinder auf. Dieser bewegt über die Schaltkolbenstange den Schaltfinger. Der Schaltfinger greift formschlüssig in die Nut des Schaltlineals, so dass das Schaltlineal mit der Schaltgabel auf der Schaltstange translatorisch verschoben werden kann. Im Kontakt Schaltfinger-Schaltlineal findet keine Gleit- oder Abwälzbewegung statt, so dass die Kontaktstelle nicht hinsichtlich Gleit- oder Wälzbewegung ausgelegt werden muss. Da es sich bei der Verbindung um eine formschlüssige Verbindung handelt, wird die Bewegung des Schaltfingers direkt auf das Schaltlineal übertragen. Dies steigert den Wirkungsgrad dieser Stellverbindung, da keine Energie zur Überwindung von Gleit- oder Haftreibung in der Kontaktstelle aufgewendet werden muss.

Die Schaltbewegung die der Schaltfinger bei diesem Mechanismus ausführt ist eine translatorische Bewegung in Hauptrichtung des Getriebes. Dadurch kann auf eine aufwendige Übersetzung, welche die translatorische Bewegung des Aktuators in eine Schwenkbewegung des Schaltfingers umwandelt, verzichtet werden. Dies erlaubt es den Aktuator und das Gestänge näher am Getriebe zu platzieren, was den Integrationsgrad des Getriebes steigert.

Um mehrere Schaltlineale mit einem Schaltfinger greifen zu können, wird der Schaltfinger drehbar auf der Schaltkolbenachse gelagert. Der Schaltfinger ist nun in der Lage, eine Drehbewegung um die Schaltkolbenachse auszuführen. Jede andere Relativbewegung zwischen Schaltfinger und Schaltkolben sind durch die Verbindung blockiert. Diese Anordnung erlaubt es die Wählbewegung der Gasse als Rotation, anstelle einer Translation auszuführen. Die dabei aufzuwendende Energie ist im Vergleich zu einer Translation deutlich geringer, da bei dieser Anordnung lediglich der Schaltfinger in Bewegung versetzt werden muss.

Der Schaltfinger ist dabei erfindungsgemäß zweiteilig ausgeführt. Der Schaltfinger besteht aus einem Gassenwählelement sowie aus einem schwenkbaren Schaltfingerelement. Genauer gesagt ist für jede Gasse ein separat ausgebildeter schwenkbarer Schaltfinger vorgesehen. Das Gassenwählelement kann mit jedem Schaltfingerelement formschlüssig in Eingriff gebracht werden. Die Schaltfingerelemente stehen ihrerseits ebenfalls mit den jeweiligen Schaltlinealen formschlüssig in Verbindung. Durch das Drehen des Gassenwählelements kann der gewünschte schwenkbare Schaltfinger (und somit die Gasse) aus den schwenkbaren Schaltfingern ausgewählt werden. Bei einer translatorischen Bewegung des Gassenwählelements wird der jeweilige Schaltfinger bewegt, so dass ein Schaltvorgang erfolgt.

Der besondere Vorteil hierbei ist, dass das reine Gassenwählelement wesentlich kleiner und leichter dimensioniert werden kann und eine Bewegung des Gassenwählers somit deutlich leichter vorgenommen werden kann. Damit kann ein Gassenwählaktuator weniger leistungsfähig ausgeführt werden oder bei gleicher Leistung schneller als im Stand der Technik schalten, da nicht mehr der gesamte Schaltfinger für die Gassenwahlfunktion bewegt werden muss, sondern nur noch der Gassenwähler. Um die Drehbewegung auf den Schaltfinger zu übertragen, wird der Aktuator direkt gemäß Anspruch 2 als Drehaktuator ausgeführt und mit dem Schaltfinger verbunden. Eine Übersetzung wird nicht benötigt. D.h. der Drehaktuator kann koaxial zur Schaltkolbenachse platziert werden. Dies verringert den benötigten Bauraum der Aktuatorik. Durch die Anordnung des Drehaktuators ohne zwischengeschaltete Übersetzungsstufe wird die Trägheit der Anordnung zur Ausführung der Wählbewegung deutlich reduziert, was eine direkte und schnelle Drehbewegung ermöglicht und den Wirkungsgrad des Mechanismus verbessert.

Im Folgenden erfolgt die Beschreibung der Erfindung anhand bevorzugter Ausführungsbeispielen unter Bezugnahme auf die beigefügten Zeichnungen.

Im Einzelnen zeigt:
Fig. 1 eine Ansicht einer herkömmlichen Getriebestellvorrichtung
Fig. 2 ein nicht erfindungsgemäßes Beispiel für eine XY-Stellvorrichtung für ein Getriebe
Fig. 3 eine vergrößerte Detailansicht des drehbar gelagerten Fingers von Fig. 2
Fig. 4 eine Ansicht eines Ausführungsbeispiels eines zweigeteilten Fingers
Fig. 5 eine Schnittansicht durch die XY-Stellvorrichtung von Fig. 2
Fig. 6 eine vergrößerte Detailansicht der Haltescheibe von Fig. 2

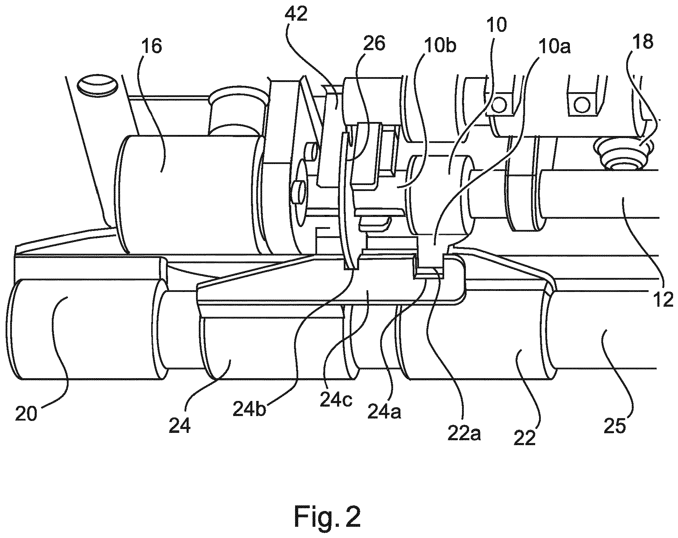

**Fig. 2** zeigt einen Ausschnitt eines nicht erfindungsgemäßen Ausführungsbeispiels für eine XY-Stellvorrichtung für ein Getriebe.

Mit 25 ist eine Schubstange bezeichnet, auf der Schaltlineale 20, 22 und 24 axial verschieblich gelagert sind. Jedes Schaltlineal ist mit (hier nicht dargestellten) Schaltgabeln verbunden, die entsprechende Schaltmuffen auf den Getriebewellen verschieben können. Ferner verfügt jedes Schaltlineal im vorliegenden Ausführungsbeispiel über zwei Aussparungen 20a, 22a und 24a, für einen Schaltfinger und 20b, 22b und 24b für eine Haltescheibe, die im Nachfolgenden noch näher beschrieben werden. In Fig. 2 ist beispielsweise die Aussparung 24a für den Schaltfinger und die Aussparung 24b für die Haltescheibe deutlich zu sehen. Der Schaltfinger 10 weist ferner einen Fingerabschnitt 10a auf. Im in Fig. 2 gezeigten Zustand steht der Fingerabschnitt 10a mit der Aussparung 22a des Schaltlineals 22 in Eingriff. Der Schaltfinger 10 ist axialfest auf einer Schaltstange 12 befestigt. Ferner weist der Schaltfinger 10 einen axialen Verlängerungsabschnitt 10b auf, der sich in Fig. 2 nach links erstreckt. Dabei handelt es sich um einen Hohlwellenabschnitt, in dem ein Drehwellenabschnitt eines Drehaktuators 16 in Eingriff steht und für eine drehfeste Verbindung sorgt. Der Drehaktuator 16, hier links im Bild, sorgt für eine Rotation des Schaltfingers 10, so dass der Fingerabschnitt 10a in eine gewünschte Winkelposition gedreht werden kann, so dass er mit einer der Aussparungen 20a, 22a oder 24a in Eingriff gelangen kann. Mittels des Drehaktuators 16 erfolgt die Gassenwahlbewegung des Schaltfingers 10, indem der Schaltfingerabschnitt 10a in die gewünschte Aussparung, beispielsweise hier 22a, des Schaltlineals 22 gebracht wird, um in einer später beschriebenen translatorischen Bewegung des Schaltfingers den entsprechenden Gang zu wählen.

Das besondere hierbei ist also, dass die Gassenwahl über eine Rotationsbewegung erfolgt, wobei sich der Drehaktuator 16 in einer Position parallel zur Schaltstange 12, zur Schubstange 25 sowie zu den Wellen des Getriebes befindet, was für einen geringen Bauraum sorgt. Ein weiterer Vorteil ergibt sich durch die Rotation, indem bei gleicher Gassenwahlgeschwindigkeit am Getriebeschnittstellenende des Schaltfingers 10 eine geringere Bewegungsenergie benötigt wird. Daher kann der Gassenwahlaktuator kleiner dimensioniert ausfallen oder bei gleicher Leistung schneller agieren. Ein weiterer Vorteil ist, dass durch das Ausführen des Gassenwahlaktuators als Drehaktuator 16 die Drehachse koaxial zur Achse des später beschriebenen Schaltaktuators bzw. Schaltkolbens 14 ausgerichtet ist, wodurch die Übertragung der Gassenwahlbewegung und die Schaltbewegung auf den Schaltfinger 10 sehr direkt vorgenommen werden kann und sich der benötigte Bauraum im Vergleich zu Fig.1 deutlich verringert.

Der Drehaktuator 16 ist also linear-axial frei mit dem Schaltfinger 10 verbunden, während er rotatorisch drehfest mit dem Schaltfinger in Eingriff steht.

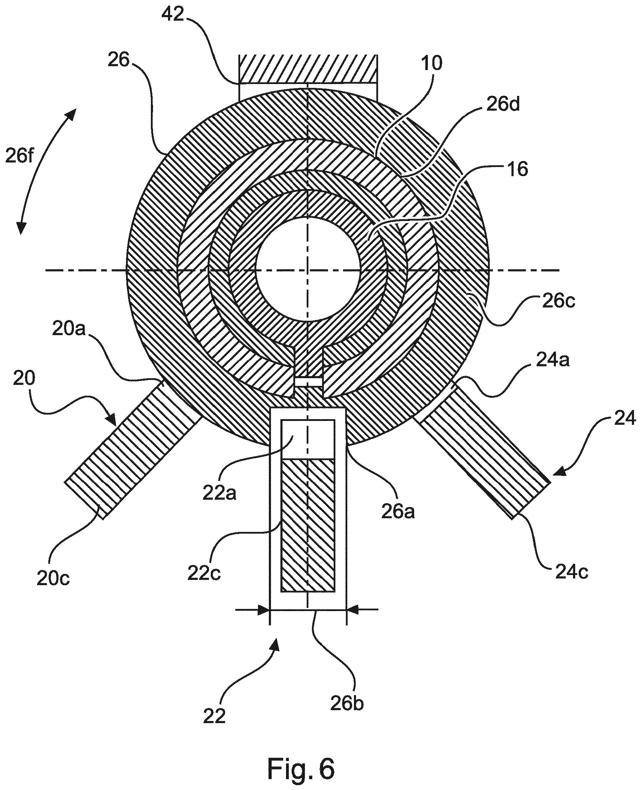

Darüber hinaus ist in Fig. 2 eine Haltescheibe 26 gezeigt, die in einer Fixierung 42 axialfest angeordnet ist. Sie ist darüber hinaus drehfest aber axial verschieblich mit einem axialen Verlängerungsabschnitt 10b des Schaltfingers 10 in Eingriff und verfügt über eine Aussparung 26a, die so angeordnet ist, dass sie in translatorischer Richtung koaxial zu dem Fingerabschnitt 10a des Schaltfingers 10 ausgerichtet ist. Eine genauere Beschreibung des Aufbaus und der Funktion der Haltescheibe 26 erfolgt später unter Bezugnahme auf Fig. 6.

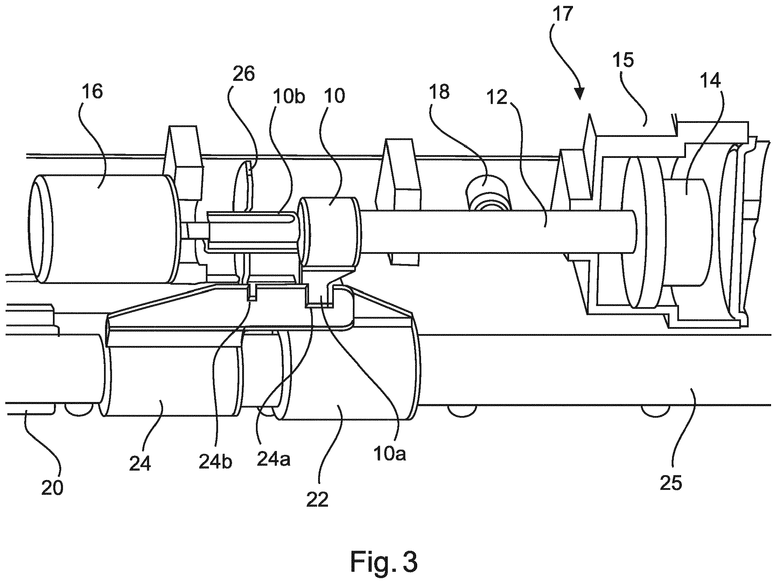

In **Fig. 3** ist eine perspektivische Ansicht der XY-Stellvorrichtung, die insbesondere diejenigen Bauteile zeigt, die zum Schalten bzw. zur Gangwahl benötigt werden.

Wie bereits ausgeführt, ist der Schaltfinger 10 axialfest mit der Schaltstange 12 verbunden, so dass eine translatorische Bewegung der Schaltstange 12 entlang ihrer Achse in X-Richtung den Schaltfinger 10 ebenfalls translatorisch bewegt. Die Schaltstange 12 ist mit einem Kolben 14 verbunden, der in einem Zylinder 15 geführt wird. Kolben 14, Schaltstange 12 und Zylinder 15 bilden zusammen den Schaltaktuator 17. Wird beispielsweise der Kolben 14 in der Figur nach links bewegt, wird die Schaltstange 12 und damit verbunden auch der Schaltfinger 10 nach links bewegt, was dazu führt, dass ein Schaltlineal 20, 22, 24, sofern es mit dem Fingerabschnitt 10a des Schaltfingers 10 in Eingriff steht, ebenfalls nach links verschoben wird, so dass eine mit dem Schaltlineal in Wirkverbindung stehende Schaltgabel, die hier nicht dargestellt ist, einen gewünschten Gang schaltet. Nach dem gleichen Wirkprinzip wird auch bei einer Bewegung nach rechts ein Gang geschaltet.

Das Besondere hierbei ist, dass sich sowohl die Schaltaktuatorvorrichtung 17, die sich in Fig. 3 rechts befindet, als auch die Drehaktuatorvorrichtung 16, die sich in Fig. 3 links befindet, in paralleler Achsrichtung zu der Schubstange 25 und den Hauptachsen des Getriebes befinden, was für einen geringen Bauraum sorgt. Ferner ist hier eine Rastierung 18 vorgesehen, die für eine Festlegung der Schaltstange 12 in bestimmten Positionen sorgt, so dass, wenn eine Gangwahl erfolgt ist, die Rastierung 18 dafür sorgt, dass die Schaltstange 12 nicht ohne weiteres aus dieser Position bewegbar ist. Dies hat den Vorteil, dass die Schaltaktuatorvorrichtung 17 nach einem Schaltvorgang energielos in Position gehalten werden kann.

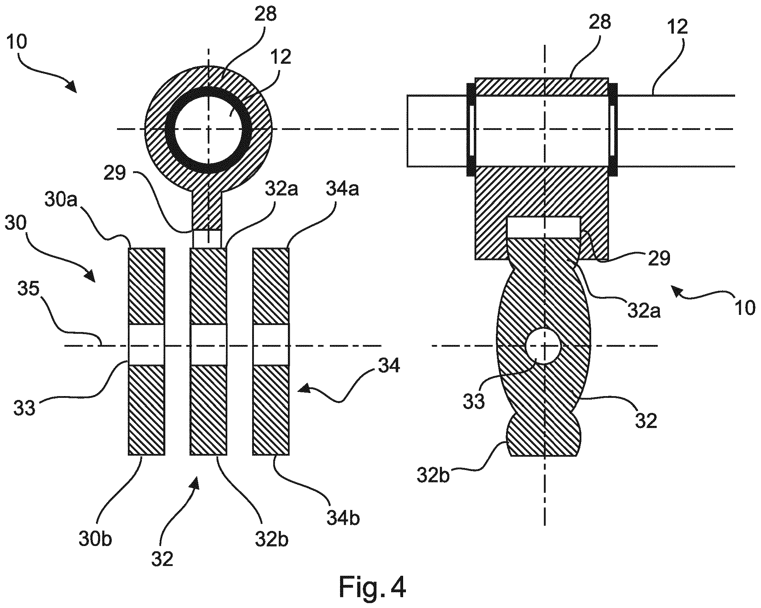

Im Folgenden wird **Fig. 4** beschrieben, in der ein erfindungsgemäßes Ausführungsbeispiel eines zweiteilig ausgebildeten Schaltfingers 10 gezeigt ist. Fig. 4a ist eine Schnittansicht von vorne, Fig. 4b ist eine Schnittansicht von der Seite.

Der Schaltfinger 10 besteht aus einem Gassenwählelement 28 auch bezeichnet als Gassenwähler sowie aus einem schwenkbaren Schaltfingerelement. Genauer gesagt sind drei separat ausgebildete schwenkbare Schaltfinger 30, 32 und 34 vorgesehen, für jede Gasse einer. Der Gassenwähler 28 ist axialfest mit der Schaltstange 12 verbunden, so dass eine Bewegung der Schaltstange 12 dem Gassenwähler 28 aufgeprägt wird. Der Gassenwähler 28 ist zudem über einen hier nicht dargestellten Drehaktuator drehbar vorgesehen. Der Gassenwähler 28 verfügt über eine Aussparung 29. Komplementär dazu verfügt jeder einzelne schwenkbare Schaltfinger 30, 32 und 34 über einen jeweiligen Eingriffsabschnitt 30a, 32a und 34a, die jeweils mit der Aussparung 29 in Eingriff bringbar sind. In der vorliegenden Darstellung befindet sich der Eingriffsabschnitt 32a des schwenkbaren Schaltfingers 32 mit der Aussparung 29 des Gassenwählers 28 in Eingriff, so dass der mittlere schwenkbare Schaltfinger 32 bei einer translatorischen Bewegung der Schaltstange 12 entsprechend bewegt wird.

Jeder der schwenkbaren Schaltfinger verfügt über eine Bohrung 33, die koaxial in Richtung einer Drehachse 35 fluchtend angeordnet sind und durch die ein nicht gezeigtes Drehachsenelement geführt ist. Wird beispielsweise wie in Fig. 4 gezeigt bei einer translatorischen Bewegung der Schaltstange 12 der mittlere schwenkbare Schaltfinger 32 bewegt, so schwenkt der schwenkbare Schaltfinger 32 um die Drehachse 35, so dass der dem Eingriffsabschnitt 32a gegenüberliegende Schaltfingerabschnitt entsprechend bewegt wird und ein Schaltvorgang erfolgt. Durch das Drehen des Gassenwählers 28 kann somit der gewünschte schwenkbare Schaltfinger aus den schwenkbaren Schaltfingern 30, 32 und 34 ausgewählt werden.

Der Vorteil hierbei ist, dass der reine Gassenwähler wesentlich kleiner und leichter dimensioniert werden kann und eine Bewegung des Gassenwählers somit deutlich leichter vorgenommen werden kann. Damit kann ein Gassenwählaktuator weniger leistungsfähig ausgeführt werden oder bei gleicher Leistung schneller als im Stand der Technik schalten, da nicht mehr der gesamte Schaltfinger für die Gassenwahlfunktion bewegt werden muss, sondern nur noch der Gassenwähler 28. Alternativ kann jeder der schwenkbaren Schaltfinger auf einer eigenen Drehachse gelagert sein, wobei die Achsen beispielsweise auf einem Bogensegment liegen, dessen Mittelpunkt auf der Achse des Drehaktuators liegt.

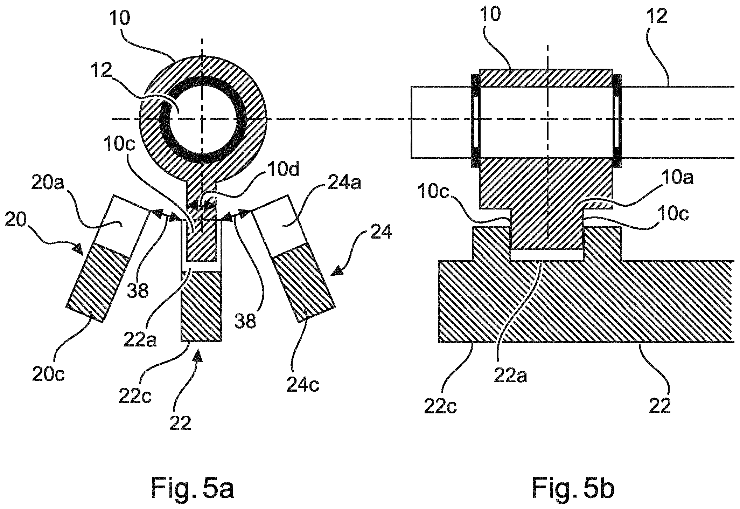

Bei der **Fig. 5a****/b** handelt es sich um eine vergrößerte Darstellung der Schnittansicht durch die XY-Stellvorrichtung ähnlich der von Fig. 2.

Im Folgenden soll ein nicht erfindungsgemäßes Beispiel beschrieben werden, mit der es unmöglich wird, dass zwei Schaltlineale gleichzeitig bewegt werden, um so gleichzeitig unbeabsichtigt zwei Gänge einzulegen, was das Getriebe zerstören würde. Ein herkömmlicher Fehlschalt-Sperrmechanismus wird dadurch überflüssig.

Im Einzelnen zeigt Fig. 5a/b die Schaltlineale 20, 22 und 24, die auf der (nicht dargestellten) Schubstange 25 über hülsenförmige Abschnitte axial verschieblich gelagert sind. Fig. 5a ist eine Schnittansicht von vorne, Fig. 5b ist eine seitliche Schnittansicht. Jedes Schaltlineal verfügt über einen Eingriffsabschnitt 20c, 22c und 24c, in dem jeweils eine Aussparung 20a, 20b, 20c vorgesehen ist. Parallel zu der Schubstange 25 ist die Schaltstange 12 gegenüberliegend angeordnet, auf der der Schaltfinger 10 drehfest gelagert ist. Der Schaltfinger 10 ist mit dem Fingerabschnitt 10a in einer Position dargestellt, in der der Fingerabschnitt 10a mit der Aussparung 22a in Eingriff steht. Das bedeutet, dass in dieser Position eine translatorische Verschiebung des Schaltfingers 10 zu einer translatorischen Bewegung des Schaltlineals 22 führt. Wenn nun für eine Gassenwahl einer anderen Gasse der Schaltfinger 10 rotiert wird, um den Fingerabschnitt 10a in entweder die Aussparung 20a des Schaltlineals 20 oder in die Aussparung 24a des Schaltflineals 24 zu bewegen, muss der Fingerabschnitt 10a entweder in Fig. 5 im oder gegen den Uhrzeigersinn gedreht werden.

Der Fingerabschnitt 10a verfügt über eine vorbestimmte Abmessung. Genauer gesagt verfügt er über eine Kontaktflächenbreite 10d, die so dimensioniert ist, dass der Fingerabschnitt 10a sicher in Eingriff mit der Aussparung 20a, 22a oder 24a bringbar ist. Zwischen den Aussparungen 20a, 22a und 24a sind ebenfalls vorbestimmt dimensionierte Abstände 38 vorgesehen, die der Fingerabschnitt 10a überwinden muss, um den Fingerabschnitt 10a in die nächste Aussparung bringen zu können. Der Abstand 38 ist dabei so gewählt, dass er größer als die Kontaktflächenbreite 10d des Fingerabschnitts 10a ist. Dadurch kann gewährleistet werden, dass es unmöglich ist, dass bei einer nicht korrekten Rotation des Schaltfingers versehentlich der Fingerabschnitt 10a in zwei Aussparungen von zwei Schaltlinealen gleichzeitig eingreift, wodurch eine Zerstörung des Getriebes sicher verhindert wird. Ein herkömmlicher Fehlschalt-Sperrmechanismus wird dadurch nicht mehr benötigt.

**Fig. 6** zeigt ein Beispiel einer Haltescheibe 26 um die Bewegung der Schaltlineale 20, 22, 24 in X-Richtung zu ermöglichen, bzw. zu verhindern, bzw. die Schaltlineale 20, 22, 24 in Neutralstellung zu halten.

Durch die Öffnung 26d ist die Haltescheibe formschlüssig und drehfest mit dem Schaltfinger 10 bzw. mit dem Verlängerungsabschnitt des Schaltfingers 10b verbindbar, derart, dass sich eine translatorische Relativbewegung zwischen Haltescheibe 26 und Verlängerungsabschnitt 10b ermöglicht. Die Haltescheibe 26 ist mit einer Aussparung 26a versehen, deren hauptsächliche Ausdehnung in radialer Richtung zur Drehrichtung 26f verläuft und zum Rand der Haltescheibe hin geöffnet ist. Die Breite 26b der Aussparung 26a ist in Abhängigkeit von Anordnung und Abmessung der Eingriffsabschnitte 20c, 22c, 24c der Schaltlineale 20, 22, 24 so gestaltet, dass maximal ein Eingriffsabschnitt 20c, 22c, 24c durch die Aussparung 26a hindurch verschiebbar ist. Ist die Aussparung 26a der Haltescheibe 26 nicht mit einem Schaltlineal 20, 22, 24 zur Deckung gebracht, wird das Schaltlineal durch die Sperrfläche der Haltescheibe 26c an der translatorischen Verschiebung in X-Richtung gehindert.

Die Haltescheibe 26 ist so ausgeführt und mit dem Schaltfinger 10 verbunden, dass sie den gleichen Drehwinkel wie der Schaltfinger 10 um die Drehachse des Schaltfingers 10 ausführt. Ist der Schaltfingerabschnitt 10a dabei mit einer Aussparung der Schaltlineale 20a, 22a, 24a für eine Schaltbewegung in Eingriff gebracht, ist die Aussparung der Haltescheibe 26a gleichzeitig so orientiert, dass der entsprechende Eingriffsabschnitt 20c, 22c, 24c, durch die Aussparung der Haltescheibe 26a translatorisch parallel zur Schubstange 25 verschiebbar ist.

Die Dicke der Haltescheibe 26 ist so ausgeführt, dass die Haltescheibe 26 durch die Aussparungen der Schaltlineale 20b, 22b, 24b und durch die Fixiervorrichtung 42 drehbar ist. Die Haltescheibe 26 ist durch die Fixiervorrichtung 42 in Richtung der Schaltstange 12 fixiert und hält durch die Paarung Sperrfläche 26c mit den Aussparungen der Schaltlineale 20b, 22b, 24b diejenigen Schaltlineale 20, 22, 24 in Neutralstellung, deren Aussparungen 20a, 22a, 24a nicht mit dem Abschnitt des Schaltfingers 10a im Eingriff stehen.

Diese Ausführung der Haltescheibe hat gegenüber herkömmlichen Haltevorrichtungen den Vorteil, dass sie konstruktiv leicht zu realisieren ist und eine für einen solchen Mechanismus vergleichsweise geringe Masse aufweist. Dadurch wird bei einer rotatorischen Gangwahlbewegung vergleichseweise wenig Energie zur Rotation der Scheibe benötigt, bzw. kann bei gleicher Leistung eine Gangwahl schneller erfolgen.

### Bezugszeichenliste

- 10: Schaltfinger
- 10a: Eingriffsabschnitt Schaltfinger
- 10b: Verlängerungsabschnitt Schaltfinger
- 10c: Kontaktfläche Schaltfinger
- 10d: Breite Kontaktfläche Schaltfinger
- 12: Schaltstange
- 14: Schaltkolben
- 15: Schaltzylinder
- 16: Drehaktuator
- 17: Schaltaktuator
- 18: Rastierungsvorrichtung
- 20: Schaltlineal A
- 20a: Aussparung für Schaltfinger an Schaltlineal A
- 20b: Aussparung für Haltescheibe an Schaltlineal A
- 20c: Eingriffsabschnitt Schaltlineal A
- 22: Schaltlineal B
- 22a: Aussparung für Schaltfinger an Schaltlineal B
- 22b: Aussparung für Haltescheibe an Schaltlineal B
- 22c: Eingriffsabschnitt Schaltlineal B
- 24: Schaltlineal C
- 24a: Aussparung für Schaltfinger an Schaltlineal C
- 24b: Aussparung für Haltescheibe an Schaltlineal C
- 24c: Eingriffsabschnitt Schaltlineal C
- 25: Schubstange
- 26: Haltescheibe
- 26a: Aussparung Haltescheibe
- 26b: Breite der Aussparung Haltescheibe
- 26c: Sperrfläche Haltescheibe
- 26d: Verbindung Haltescheibe zu Schaltfinger
- 26f: Drehrichtung der Haltescheibe
- 28: Gassenwählelement bzw. Gassenwähler
- 29: Aussparung für Gassenwählelement bzw. Gassenwähler
- 30: schwenkbarer Schaltfinger A
- 30a: Eingriffsabschnitt schwenkbarer Schaltfinger A
- 30b: Schaltabschnitt schwenkbarer Schaltfinger A
- 32: schwenkbarer Schaltfinger B
- 32a: Eingriffsabschnitt schwenkbarer Schaltfinger B
- 32b: Schaltabschnitt schwenkbarer Schaltfinger B
- 33: Bohrung schwenkbare Schaltfinger
- 34: schwenkbarer Schaltfinger C
- 34a: Eingriffsabschnitt schwenkbarer Schaltfinger C
- 34b: Schaltabschnitt schwenkbarer Schaltfinger C
- 35: Drehachse schwenkbare Schaltfinger
- 38: minimaler Abstand zwischen zwei benachbarten Schaltlinealen
- 42: Fixierung Haltescheibe
- 50: herkömmliche Getriebestellvorrichtung
- 52: Aktuator zur Schaltgassenauswahl
- 54: Aktuator zur Schaltbewegungsdurchführung
- 56: Schaltwelle
- 58: Schaltfinger
- 60: Schaltstange
- 62: Schaltstange
- 64: Schaltstange
- 66: Verriegelungseinrichtung
- 68: Steg
- 70: Nut
- 72: Ringartiger Endabschnitt
- 74: Schalthebel
- 76: Kolbenstange
- 78: Zylinder
- 80: Kolben
- 82: Schaltgetriebe

## Patentansprüche

1. Gang und Gassen XY-Stellvorrichtung für ein Getriebe mit einer Getriebehauptachse, die parallel zur Richtung der Drehachse der schaltbaren Wellen Z des Getriebes verläuft und deren Richtung nachfolgend als X-Richtung bezeichnet wird und einer dazu orthogonal orientierten Y-Richtung quer zur Drehachse der schaltbaren Wellen, aufweisend
einen Schaltfinger (10), der in einer X-Richtung entlang der Getriebehauptachse verschiebbar ist, um einen gewünschten Gang einzulegen,
mindestens zwei in X-Richtung, parallel zur Getriebehauptachse, verlaufende Schaltlineale (20, 22, 24), mit denen der Schaltfinger (10) jeweils in Eingriff bringbar ist, um ein gewünschtes Schaltlineal (20, 22, 24) auszuwählen,
wobei
der Schaltfinger (10) um eine Drehachse in X-Richtung drehbar gelagert ist, um das gewünschte Schaltlineal (20, 22, 24) auszuwählen, **dadurch gekennzeichnet, dass** der Schaltfinger (10) zweigeteilt ausgebildet ist und ein Gassenwählelement (28), das drehbar um die X-Richtung vorgesehen ist, und ein separates Schaltfingerelement pro Gasse (30, 32, 34) aufweist,
wobei des Weiteren eine Formschlußverbindung vorgesehen ist, die so konfiguriert ist, dass sie für einen Formschluß in X-Richtung zwischen dem Gassenwählelement (28), vorzugsweise einer Aussparung (29) des Gassenwählelements (28), und dem jeweils ausgewählten Schaltfingerelement (30a, 32a, 34a) sorgt.

2. Gang und Gassen XY-Stellvorrichtung gemäß Anspruch 1, des Weiteren aufweisend einen Drehaktuator (16), der über eine Drehwelle mit dem Gassenwählelement (28) drehfest verbindbar ist.

3. Gang und Gassen XY-Stellvorrichtung gemäß Anspruch 1,
wobei
die separaten Schaltfingerelemente (30, 32, 34) um eine gemeinsame Drehachse (35) parallel zur Y-Richtung drehbar gelagert sind.

4. Gang und Gassen XY-Stellvorrichtung gemäß Anspruch 1,
wobei die separaten Schaltfingerelemente (30, 32, 34) um separate Drehachsen drehbar gelagert sind.

5. Gang und Gassen XY-Stellvorrichtung gemäß Anspruch 1,
wobei
die Gang und Gassen XY-Stellvorrichtung eine Schaltstange (12) aufweist, welche in Richtung der Getriebehauptachse translatorisch verschiebbar ist, das Gassenwählelement (28) axialfest mit der Schaltstange (12) verbunden ist, so dass damit ein gewünschter Gang einlegbar ist, und
die Schaltstange (12) mit einem Kolben (14) eines in X-Richtung orientierten Hydraulik- oder Pneumatikzylinders (15) verbunden ist.

6. Gang und Gassen XY-Stellvorrichtung gemäß Anspruch 1,
wobei
die Gang und Gassen XY-Stellvorrichtung eine Schaltstange (12) aufweist, welche in Richtung der Getriebehauptachse translatorisch verschiebbar ist, das Gassenwählelement (28) axialfest mit der Schaltstange (12) verbunden ist, so dass damit ein gewünschter Gang einlegbar ist, und
die Schaltstange (12) mit einem Linearmotor verbunden ist, welcher der Schaltstange (12) eine Bewegung in X-Richtung aufprägen kann.

7. Gang und Gassen XY-Stellvorrichtung gemäß Anspruch 1, des Weiteren aufweisend ein Getriebe das über eine Drehwelle drehfest mit dem Gassenwählelement (28) verbindbar ist und worüber eine Drehbewegung auf den Gassenwählelement (28) aufgeprägt werden kann.

8. Gang und Gassen XY-Stellvorrichtung gemäß einem der Ansprüche 5 oder 6, wobei
die Schaltstange (12) um die X-Achse drehbar ist; und
wobei
das Gassenwählelement (28) axial- und drehfest mit der Schaltstange (12) verbunden ist, so dass damit ein gewünschter Gang einlegbar und eine gewünschte Schaltgasse auswählbar ist.

## Claims

1. Gear and gate XY actuator device for a gearbox, having a main gear axis that extends parallel to the direction of the rotational axis of the selectable shafts of the gearbox, the direction thereof being subsequently referred to as the X direction, and a Y direction oriented orthogonally thereto transverse to the rotational axis of the selectable shafts, having
a shift finger (10) which can be displaced in an X direction along the main gear axis in order to engage a desired gear,
at least two linear shift guides (20, 22, 24) which extend in the X direction parallel to the main gear axis and with which the shift finger (10) can engage in each case in order to select a desired linear shift guide (20, 22, 24),
wherein the shift finger (10) is mounted rotatably about a rotational axis in the X direction in order to select the desired linear shift guide (20, 22, 24), **characterised in that** the shift finger (10) is formed in two parts and has a gear selector element (28), which is provided rotatably about the X direction, and a separate shift finger element per gear (30, 32, 34),
wherein furthermore a form-fitting connection is provided which is configured such that it provides a form fit in the X direction between the gate selector element (28), preferably a recess (29) of the gate selector element (28), and the shift finger element (30a, 32a, 34a) selected in each case.

2. Gear and gate XY actuator device according to claim 1, further having a rotary actuator (16) which can be connected by a rotary shaft to the gate selector element (28) for conjoint rotation.

3. Gear and gate XY actuator device according to claim 1,
wherein the separate switch finger elements (30, 32, 34) are mounted for rotation about a common rotational axis (35) parallel to the Y direction.

4. Gear and gate XY actuator device according to claim 1,
wherein the separate switch finger elements (30, 32, 34) are mounted for rotation about separate rotational axes.

5. Gear and gate XY actuator device according to claim 1,
wherein the gear and gate XY actuator device has a shift rod (12) which can be translationally displaced in the direction of the main gear axis, and the gate selector element (28) is connected to the shift rod (12) for conjoint axial movement such that a desired gear can be engaged, and
the shift rod (12) is connected to a piston (14) of a hydraulic or pneumatic cylinder (15) oriented in the X direction.

6. Gear and gate XY actuator device according to claim 1,
wherein the gear and gate XY actuator device has a shift rod (12) which can be translationally displaced in the direction of the main gear axis,
wherein the gate selector element (28) is connected to the shift rod (12) for conjoint axial movement such that a desired gear can be engaged, and
the shift rod (12) is connected to a linear motor which can impart to the shift rod (12) a movement in the X direction.

7. Gear and gate XY actuator device according to claim 1,
further having a gear which can be connected by a rotary shaft to the gate selector element (28) for conjoint rotation and via which a rotational movement can be imparted to the gate selector element (28).

8. Gear and gate XY actuator device according to claim any one of claims 5 or 6,
wherein the shift rod (12) is rotatable about the X axis; and
wherein the gate selector element (28) is connected to the shift rod (12) for conjoint axial and rotational movement such that a desired gear can be engaged and a linear shift guide can be selected.

## Revendications

1. Dispositif d'actionnement de rapport et de voie XY pour une boîte de vitesses avec un axe principal de boîte de vitesse qui s'étend parallèlement au sens de l'axe de rotation des arbres embrayables de la boîte de vitesse et dont le sens est désigné par la suite par sens X et un sens Y orienté orthogonalement à celui-ci transversalement à l'axe de rotation des arbres embrayables, présentant
un doigt de passage de vitesses (10) qui est mobile dans un sens X le long de l'axe principal de boîte de vitesses afin d'enclencher un rapport souhaité,
au moins deux lignes de passage de vitesses (20, 22, 24) s'étendant dans le sens X, parallèlement à l'axe principal de boîte de vitesses, avec lesquelles le doigt de passage de vitesses (10) peut être amené respectivement en prise afin de sélectionner une ligne de passage de vitesses (20, 22, 24) souhaitée,
dans lequel le doigt de passage de vitesses (10) est logé de manière rotative autour d'un axe de rotation dans le sens X afin de sélectionner la ligne de passage de vitesses (20, 22, 24) souhaitée, **caractérisé en ce que** le doigt de passage de vitesses (10) est réalisé en deux parties et présente un élément de choix de voie (28) qui est prévu de manière rotative autour du sens X, et un élément de doigt de passage de vitesses séparé par voie (30, 32, 34),
dans lequel en outre une liaison à complémentarité de formes est prévue, laquelle est configurée de sorte qu'elle veille à une liaison à complémentarité de formes dans le sens X entre l'élément de choix de voie (28), de préférence un évidement (29) de l'élément de choix de voie (28) et l'élément de doigt de passage de vitesses (30a, 32a, 34a) sélectionné respectivement.

2. Dispositif d'actionnement de rapport et de voie XY selon la revendication 1, présentant en outre un actionneur rotatif (16) qui peut être relié sans pouvoir tourner par le biais d'un arbre de rotation à l'élément de choix de voie (28).

3. Dispositif d'actionnement de rapport et de voie XY selon la revendication 1,
dans lequel les éléments de doigt de passage de vitesses (30, 32, 34) séparés sont logés de manière rotative autour d'un axe de rotation (35) commun parallèlement au sens Y.

4. Dispositif d'actionnement de rapport et de voie XY selon la revendication 1,
dans lequel les éléments de doigt de passage de vitesses (30, 32, 34) séparés sont logés de manière rotative autour d'axes de rotation séparés.

5. Dispositif d'actionnement de rapport et de voie XY selon la revendication 1,
dans lequel le dispositif d'actionnement de rapport et de voie XY présente une tringle de passage de vitesses (12) qui est mobile en translation en direction de l'axe principal de boîte de vitesses, l'élément de choix de voie (28) est relié de manière fixe axialement à la tringle de passage de vitesses (12) de sorte que un rapport souhaité puisse être enclenché ainsi, et
la tringle de passage de vitesses (12) est reliée à un piston (14) d'un vérin hydraulique ou pneumatique (15) orienté dans le sens X.

6. Dispositif d'actionnement de rapport et de voie XY selon la revendication 1,
dans lequel le dispositif d'actionnement de rapport et de voie XY présente une tringle de passage de vitesses (12) qui est mobile en translation en direction de l'axe principal de boîte de vitesses,
l'élément de choix de voie (28) est relié de manière fixe axialement à la tringle de passage de vitesses (12) de sorte qu'un rapport souhaité puisse ainsi être enclenché, et
la tringle de passage de vitesses (12) est reliée à un moteur linéaire qui peut appliquer à la tringle de passage de vitesses (12) un mouvement dans le sens X.

7. Dispositif d'actionnement de rapport et de voie XY selon la revendication 1,
présentant en outre une boîte de vitesses qui peut être reliée sans pouvoir tourner par le biais d'un arbre de rotation à l'élément de choix de voie (28) et par le biais de quoi un mouvement de rotation peut être appliqué sur l'élément de choix de voie (28).

8. Dispositif d'actionnement de rapport et de voie XY selon l'une quelconque des revendications 5 ou 6,
dans lequel la tringle de passage de vitesses (12) est rotative autour de l'axe X ; et
dans lequel l'élément de choix de voie (28) est relié de manière fixe axialement et sans pouvoir tourner à la tringle de passage de vitesses (12) de sorte qu'un rapport souhaité puisse ainsi être enclenché et une voie de passage de vitesses souhaitée puisse être sélectionnée.
